# EUROPEAN PATENT SPECIFICATION

(11) **EP 4 340 622 B1**
(45) Date of publication and mention of the grant of the patent: **03.09.2025**
(21) Application number: 22728673.9
(22) Date of filing: 16.05.2022
(51) Int. Cl.: A21D 13/45, A21D 13/47

(54) **WAFER FOR FOODSTUFF PRODUCTS**
WAFFEL FÜR LEBENSMITTELPRODUKTE
TRANCHE POUR PRODUITS ALIMENTAIRES

(30) Priority: 21.05.2021 IT 202100013268
(43) Date of publication of application: 27.03.2024
(73) Proprietor: SOREMARTEC S.A., 2633 Senningerberg (LU)
(72) Inventor: RATTO, Gabriele, 12051 Alba (CN) (IT)
(74) Representative: Buzzi, Notaro & Antonielli d'Oulx S.p.A.
(86) International application number: PCT/IB2022/054528
(87) International publication number: WO 2022/243837

(56) References cited:
- EP-A1- 1 967 069
- WO-A1-2011/067733
- ANONYMOUS: "Sesam Madeleines mit Kikkoman natürlich gebrauter Sojasauce Süß - Kikkoman Rezepte", 18 April 2021 (2021-04-18), XP055885344, Retrieved from the Internet <URL:https://www.kikkoman.at/rezepte/recipe-detail/r/sesam-madeleines-mit-kikkoman-natuerlich-gebrauter-sojasauce-suess/> [retrieved on 20220131]
- ANONYMOUS: "Sesam Madeleines mit Kikkoman natürlich gebrauter Sojasauce Süß - Kikkoman Rezepte", 18 April 2021 (2021-04-18), XP055885350, Retrieved from the Internet <URL:https://web.archive.org/web/20210418202923/https://www.kikkoman.at/rezepte/recipe-detail/r/sesam-madeleines-mit-kikkoman-natuerlich-gebrauter-sojasauce-suess/> [retrieved on 20220131]

## Description

The present invention relates to a wafer for foodstuff products characterized in that it presents, on a surface thereof, decorations constituted by granular material integrated in the structure of the wafer itself.

Already known to the art it is to coat wafers for foodstuff products with a layer having adhesive properties and then apply on the layer granular material in order to coat the outer surface of the wafer entirely.

The above known modality presents, however, a series of drawbacks.

In the first place, the bond that is formed between the granular material and the layer of coating is weak so that it is possible that the granules come away and get scattered both along the line for production and packaging of the product and inside the package of the packaged product.

The presence of granular material dispersed along the production and packaging line may cause malfunctioning of the line itself. For instance, with reference to lines for the production of hermetically sealed packages, the granular material may reach the sealing means of the line, leading to failure in hermetic closing of the packages thus produced.

With reference to the packaged product, the presence of granular material not attached to the product, but loose inside the package, evidently constitutes a reason for consumer dissatisfaction. EP1967069A1 and WO2011/067733A1 discloses certain prior art of possible interest as technical background.

The wafer described herein is able to overcome the aforesaid drawbacks of the prior art.

In general, the method described herein presents the characteristics forming the subject matter of Claim 1. The solution described herein moreover regards a wafer according to Claim 6.

Further characteristics and advantages of the invention will emerge clearly from the ensuing description with reference to the annexed drawings, which are provided purely by way of non-limiting example and in which:
- Figure 1 illustrates an example of the wafer described herein according to an axonometric view;
- Figures 1A and 1B illustrate, respectively, a top plan view and a lateral view of the wafer of Figure 1;
- Figure 2 illustrates an example of method for the production of the wafer described herein;
- Figure 3 illustrates an example of wafer baking plate used in the method described herein; and
- Figure 4 illustrates a second example of wafer baking plate used in the method described herein.

In the ensuing description various specific details are illustrated aimed at providing an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As anticipated above, the wafer described herein is characterized in that it has decorations constituted by granular material integrated in the structure of the wafer. Preferably, the granules are englobed in the thickness of the wafer for a part of their volume.

As compared to the prior art discussed at the start, the wafer described herein hence differs in that it is provided, already in itself, with decorations consisting of granular material so that it is no longer necessary to carry out the operations of the prior art of applying, on the wafer already formed, a coating layer and then positioning thereon the granular material for decoration of the wafer.

The decorations in question, forming part of the wafer, are firmly anchored, and the drawbacks of the prior art discussed above are consequently completely overcome.

Incidentally, it should be noted that the term "wafer" is used in the present description to indicate a layer of any shape, resulting from forming and baking in a baking plate a batter, i.e., a liquid or semiliquid dough, for oven-baked products. This term is not hence to be understood as in any way limiting the nature of the ingredients used for the dough; the "wafer" referred to may in fact be, for example, a wafer, obtained from a conventional wafer batter, or else a wafer of bread obtained according to a leavening process.

The wafer described herein has, in general, a surface from which the aforesaid granular material integrated in its structure projects. In view of the function of decoration of the aforesaid material, the surface in question is evidently to constitute in the end product an outer surface or in any case a surface visible by the consumer during consumption of the product.

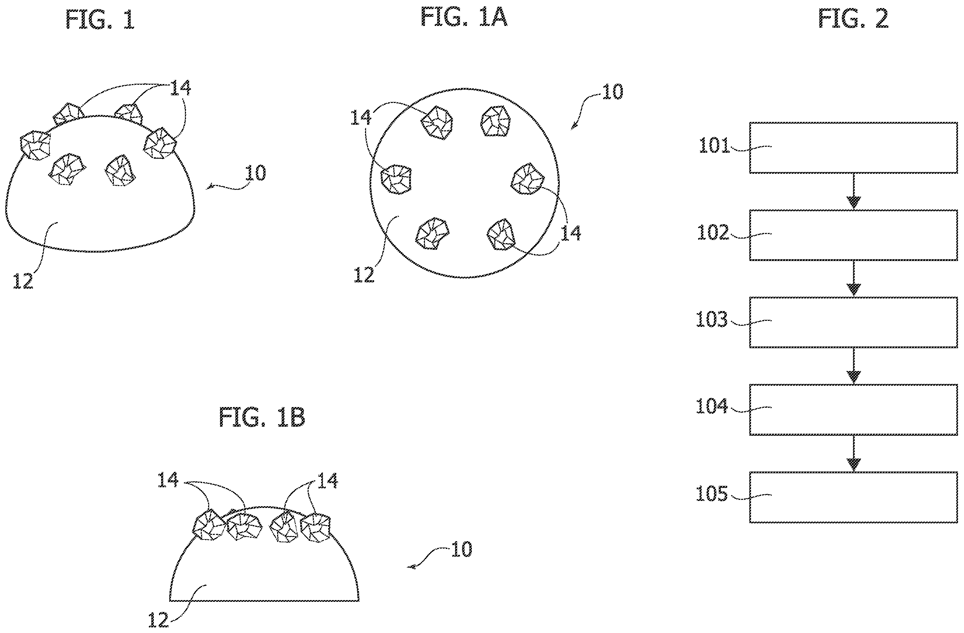

Figures 1, 1A, and 1B represent an example of the wafer described herein.

The wafer illustrated in the above figures, designated as a whole by the reference number 10, is shaped like a spherical shell and is provided, on its surface 12 (illustrated in the figures), with a granular material 14 positioned according to a graphic representation, i.e., a pre-set pattern, which, by way of example in the figures, is a circumference.

According to what has been said above, the material 14 is integrated in the structure of the wafer and projects outwards from the surface 12; i.e., the individual granules have parts that extend outside beyond the surrounding regions of the surface 12 itself, preferably for an amount of at least 0.1 mm. As mentioned above, preferably the individual granules are englobed in the thickness of the wafer for a part of their own volume.

The size of the granular material may vary according to the type of material and the specific embodiment of wafer that is to be obtained.

Preferably, the granular material is of larger size than the thickness of the layer of the wafer. By way of example, the wafer may have a thickness comprised between 1 mm and 2.5 mm and the size of the granular material may be comprised between 0.1 mm and 10 mm.

In general, the granular material may be obtained from any foodstuff material that can be reduced to granules. The material in question is obtained from cereals, dry fruit, extrusions of semi-finished foodstuff products, candied fruit, dried vegetables and fruit, seeds, cocoa beans etc. It is clearly possible to envisage the combination of different materials. The person skilled in the sector will understand that it is possible to use any foodstuff material capable of withstanding the baking temperatures envisaged in the specific applications;
usual baking temperatures for a wafer dough may range, for example, between 150 °C and 190°C.

With reference now to Figure 2, this is a schematic illustration of an example of method for making a wafer as described above.

The method in question envisages the use of means of a conventional type. In particular, it envisages the use of a wafer baking plate provided with a forming chamber, which is usually constituted by two half-plates that can be coupled together to form the aforesaid chamber, and with means for baking the wafer dough inside the forming chamber of the baking plate, for example an oven or heating elements integrated in the baking plate itself. The baking plate acts as mould that bestows a given shape on the wafer, while this gradually acquires consistency and hardens as a result of baking of the batter. Since they are means widely known to the person skilled in the sector, any more detailed description can be avoided in order not to overburden the present disclosure.

The method in question includes a step 101 of preparation of the dough for production of the wafer. This may be a common dough or batter for the production of wafers.

By way of example, the recipe of the dough may comprise the following ingredients (the quantities indicated are expressed in weight percentages with respect to the overall weight of the dough):
(42% -39%) wheat flour;
(52%-49%) water;
(5%-7%) sugar;
(5%-10%) milk;
(2%-4%) oil;
(<1%) soy lecithin;
(<1%) salt; and
(<1%) sodium bicarbonate.

The recipe of the dough may obviously be varied according to the requirements of the specific applications.

Possibly, the method also includes a step 102 of preparation of the granular material, in particular when it is a semi-finished product, such as grated meringue.

Hence, the method envisages introducing the granular material into the forming chamber of the baking plate (step 103). In particular, the granular material is positioned in one or more pre-defined regions of the forming chamber to re-produce substantially the same graphic representation that is to be re-produced on the wafer.

In one or more preferred embodiments, the inner surface of the forming chamber on which the surface 12 of the wafer will be formed, is delimited, at least in the aforesaid predefined regions, by one or more inserts made of elastic material, for example silicone, for elastically supporting the granular material.

In this way, the forces of pressure to which the granular material could be subjected within the forming chamber are eliminated or at least reduced so as to prevent or limit deformations due to pressing of the granular material.

Alternatively, and once again for the same purpose, on the aforesaid inner surface of the forming chamber one or more cavities are provided for accommodating the granular material in a position at least partially set below the inner surface itself.

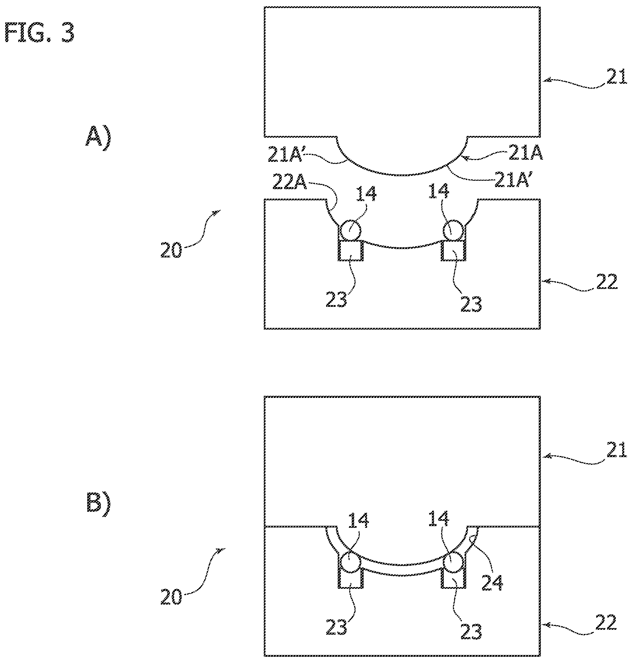

Figure 3 shows an example of wafer baking plate 20 formed by two half-plates 21, 22, a top one and a bottom one, respectively, which comprise respective forming surfaces 21A and 22A and are mobile with respect to one another between an open condition and a closed condition in which the forming surfaces 21A and 22A together delimit a forming chamber 24. The forming surface 22A is designed to form the surface 12 of the wafer 10 and envisages a ring-shaped elastic insert 23, set in the region of the forming chamber 24 where the granular material 14 will be placed. The image a) of Figure 3 shows the two plates 21, 22 in the open condition and the granular material 14 laid on the insert 23. Preferably, the granular material 14 has a size greater than the height of the forming chamber 24 that is to define the thickness of the wafer 10 - at least - in the region where the granular material 14 is present. The forming surface 21A of the plate 21 has an annular portion 21A', which is located in a position opposed to that of the insert 23.

The method at this point envisages introducing into the forming chamber also the wafer dough, which, as it fills the forming chamber, will come into contact with the granular material introduced previously (step 104) .

With reference to the example of Figure 3, the image b) of this figure shows the two half-plates 21, 22 in the closed condition and the forming chamber 24 filled with the wafer dough; it is to be noted that, on account of the larger size of the granular material 14 as compared to the height of the forming chamber 24, when the two half-plates 21, 22 are closed, the granular material 14 is pushed by the portion 21A' of the forming surface 21A of the half-plate 21 against the insert 23, penetrating it and subjecting it to deformation by compression, and in this way the granular material 14 moves into a position where it projects from what will be the surface 12 of the wafer 10 formed. Thanks to the elasticity of the insert 23, the forces of pressure that act on the granular material 14 are limited, and hence the latter does not undergo any deformation. At the same time, the elastic force of the insert 23 that acts on the granular material 14 keeps the latter in position inside the forming chamber 24.

It should be noted that the configuration of the baking plate 20 will vary according to the needs of the specific applications, in particular according to the shape of the wafer 10 and of the decorative pattern to be provided thereon via the granular material 14.

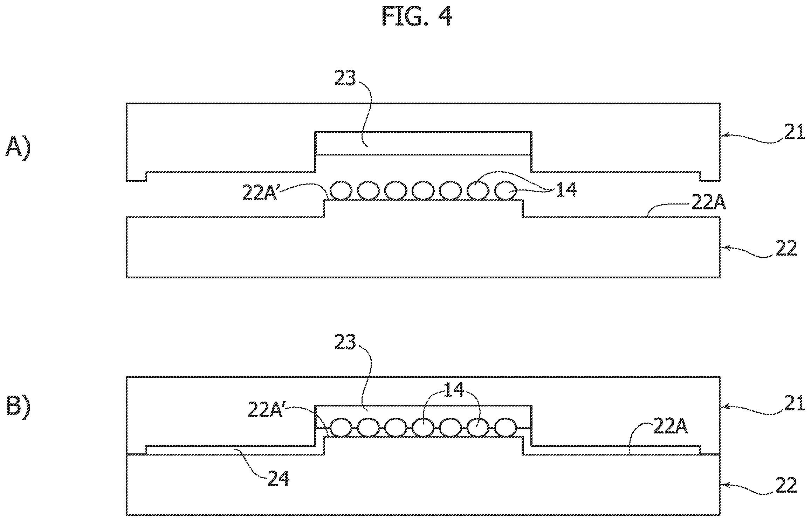

In this connection, Figure 4 shows a further example of a baking plate 20 for obtaining a wafer 10 having an overall-planar conformation provided with a raised central region on which the granular material 14 is positioned to form a decorative pattern. In Figure 3, the same reference numbers as those of Figure 2 are used for the elements of the baking plate homologous to elements of the baking plate of Figure 1. It will be noted that in this case the elastic insert 23 is fitted on the forming surface 21A of the top half-plate 21, whereas the granular material 14 is laid on a raised portion 22A' of the forming surface 22A of the bottom half-plate 22. Also in this case, when the two half-plates 21, 22 are closed, the granular material 14 is pushed against the insert 23 - by the raised portion 22A' of the half-plate 22 -, penetrating it and subjecting it to deformation by compression, and is brought into a position where it projects from what will be the outer surface of the wafer 10 formed.

The method then envisages a step 105 of baking of the dough inside the forming chamber of the baking plate. The operating parameters of this step, such as temperature and duration, may be the same as those of the methods for the production of wafers according to the prior art.

At the end of this step, the granular material will be integrated in the structure of the wafer and will be positioned on one of its surfaces according to the aforementioned graphic representation.

It should be noted that it is in any case possible to envisage embodiments of the method alternative to the one illustrated, in which, for example, the granular material is introduced into the forming chamber after the wafer dough.

More in general, what is important for the method described herein is i) that the granular material should be introduced into the forming chamber separately from the dough so that it can be positioned according to the desired graphic representation, and ii) that it should be brought into contact with the dough prior to the baking step or at least before the end of this step, so that it will come to form part of the structure of the wafer.

The wafer thus obtained is in itself provided with a decoration made of granular material, with the advantages discussed previously.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A method for making a wafer (10) comprising a surface and granular material (14) integrated in the structure of said wafer and projecting from said surface (12), said method comprising:
- preparing a wafer dough (101);
- introducing said dough into the forming chamber of a baking plate or mould (104);
- baking said dough within said forming chamber to obtain said wafer at the end of the baking step (105);
said method being **characterized in that** it comprises:
- introducing (103) said granular material into said forming chamber separately from said dough, and bringing said granular material into contact with said dough prior to said baking step (105) or at least before the end of said baking step, so that, once said step is through, said granular material will be integrated in the structure of said wafer and project from said surface,
wherein said granular material is obtained from one or more of the following products or semi-finished products: cereals, dry fruit, extrusions of semi-finished foodstuff products, candied fruit, dried vegetables and fruit, seeds, cocoa beans, etc.,
wherein said baking plate or mould (20) comprises a first half-plate or half-mould (21) and a second half-plate or half-mould (22) that have respective forming surfaces (21A, 22A) and are mobile with respect to one another between an open condition and a closed condition in which the respective forming surfaces (21A, 22A) of said first and second half-plates or half-moulds (21, 22) together delimit said forming chamber (24), said method including:
- in the open condition of said half-plates or half-moulds (21, 22), laying the granular material (14) on said first or second forming surface (21A, 22A) according to a pre-set pattern and then dispensing the wafer dough on said first or second forming surface (21A, 22A);
- bringing said half-plates or half-moulds (21, 22) into the closed condition and, in this condition, baking said wafer dough in said forming chamber (24), wherein in the closed condition of said first and second half-plates or half-moulds (21, 22) the granular material is elastically withheld by at least one elastic insert (23) that defines at least partially the forming surface of said first or second half-plate or half-mould (21, 22).

2. The method according to Claim 1, wherein said granular material (14) is arranged inside said forming chamber according to said pre-set pattern.

3. The method according to Claim 1 or Claim 2, wherein the forming chamber has an inner surface, formed on which is the surface of said wafer, and wherein the inner surface of the forming chamber is delimited at least partially by one or more inserts made of elastic material to provide an elastic support for the granular material.

4. The method according to Claim 1, wherein said granular material (14) is pressed against said elastic insert (23) by at least one portion (21A'; 22A') of the forming surface (21A; 22A) of said second or first half-plate or half-mould (22; 21) that is opposite to said elastic insert (23) so that said granular material (14) will penetrate at least partially said elastic insert (23).

5. The method according to Claim 1, wherein the forming chamber has an inner surface, formed on which is the surface of said wafer, and wherein provided on the inner surface of the forming chamber are one or more cavities for housing the granular material in a position at least partially set below the inner surface itself.

6. A wafer (10) for foodstuff products, obtained by means of a method according to any one of the preceding claims, said wafer comprising a surface (12),
**characterized in that** it comprises granular material (14) integrated in the structure of said wafer and projecting from said surface (12), wherein said granular material is obtained from one or more of the following products or semi-finished products: cereals, dry fruit, extrusions of semi-finished foodstuff products, candied fruit, dried vegetables and fruit, seeds, cocoa beans, etc..

7. The wafer according to Claim 6, wherein the granules of said granular material (14) are englobed in the thickness of said wafer (10) for a part of their volume.

8. The wafer according to Claim 6 or Claim 7, having a given thickness and wherein said granular material (14) is of larger size than said thickness.

9. The wafer according to any one of claims 6 to 8, wherein said granular material (14) is positioned on said surface according to a pre-set pattern.

10. The wafer according to any one of claims 6 to 9, wherein said granular material (14) is distributed in one or more pre-set regions of said surface (12) of said wafer.

11. The wafer according to any one of claims 6 to 10, wherein said granular material (14) projects from said surface for an amount of at least 0.1 mm.

12. The wafer according to any one of claims 6 to 11, wherein said granular material does not undergo deformation due to pressure or, in any case, undergoes only limited deformation due to pressure.

## Patentansprüche

1. Verfahren zur Herstellung einer Waffel (10), die eine Oberfläche und ein körniges Material (14) umfasst, das in die Struktur der Waffel integriert ist und von der Oberfläche (12) vorsteht, wobei das Verfahren folgende Schritte umfasst:
- Herstellen eines Waffelteigs (101);
- Einbringen des Teigs in die Formkammer einer Backplatte oder Form (104);
- Backen des Teigs in der Formkammer, um am Ende des Backvorgangs (105) die Waffel zu erhalten; wobei das Verfahren **dadurch gekennzeichnet ist, dass** es folgende Schritte umfasst:
- Einbringen (103) des körnigen Materials getrennt von dem Teig in die Formkammer, und in-Kontakt-Bringen des körnigen Materials vor dem Backvorgang (105) oder zumindest vor dem Ende des Backvorgangs mit dem Teig, so dass nach Abschluss des Backvorgangs das körnige Material in die Struktur der Waffel integriert ist und aus der Oberfläche herausragt, wobei das körnige Material aus einem oder mehreren der folgenden Produkte oder Halbfertigprodukte hergestellt wird: Getreide, Trockenfrüchte, Extrudate aus halbfertigen Lebensmitteln, kandierte Früchte, getrocknetes Gemüse und Obst, Samen, Kakaobohnen usw., wobei die Backplatte oder Form (20) eine erste Halbplatte oder Halbform (21) und eine zweite Halbplatte oder Halbform (22) umfasst, die jeweilige Formflächen (21A, 22A) aufweisen und relativ zueinander zwischen einer offenen Stellung und einer geschlossenen Stellung bewegbar sind, in der die jeweiligen Formflächen (21A, 22A) der ersten und zweiten Halbplatte oder Halbform (21, 22) zusammen die Formkammer (24) begrenzen, wobei das Verfahren folgende Schritte umfasst:
- in der offenen Stellung der Halbplatten oder Halbformen (21, 22) Ausbringen des körnigen Materials (14) auf die erste oder zweite Formfläche (21A, 22A) gemäß einem vorgegebenen Muster und anschließendes Verteilen des Waffelteigs auf die erste oder zweite Formfläche (21A, 22A);
- Bringen der Halbplatten oder Halbformen (21, 22) in die geschlossene Stellung und, in diesem Zustand Backen des Waffelteigs in der Formkammer (24), wobei in der geschlossenen Stellung der ersten und zweiten Halbplatten oder Halbformen (21, 22) das körnige Material durch mindestens einen elastischen Einsatz (23), der mindestens teilweise die Formfläche der ersten oder zweiten Halbplatte oder Halbform (21, 22) definiert, elastisch zurückgehalten wird.

2. Verfahren nach Anspruch 1, wobei das körnige Material (14) innerhalb der Formkammer gemäß dem vorgegebenen Muster angeordnet ist.

3. Verfahren nach Anspruch 1 oder 2, wobei die Formkammer eine Innenfläche aufweist, auf der die Oberfläche der Waffel geformt wird, und wobei die Innenfläche der Formkammer zumindest teilweise durch einen oder mehrere Einsätze aus elastischem Material begrenzt ist, um einen elastischen Träger für das körnige Material vorzusehen.

4. Verfahren nach Anspruch 1, wobei das körnige Material (14) gegen den elastischen Einsatz (23) durch mindestens einen Abschnitt (21A'; 22A') der Formfläche (21A; 22A) der zweiten oder ersten Halbplatte oder Halbeform (22; 21) gedrückt wird, die dem elastischen Einsatz (23) gegenüberliegt, so dass das körnige Material (14) zumindest teilweise in den elastische Einsatz (23) eindringt.

5. Verfahren nach Anspruch 1, wobei die Formkammer eine Innenfläche aufweist, auf der die Oberfläche der Waffel geformt wird, und wobei an der Innenfläche der Formkammer ein oder mehrere Hohlräume zur Aufnahme des körnigen Materials in einer Position vorgesehen sind, die zumindest teilweise unterhalb der Innenfläche selbst angeordnet ist.

6. Waffel (10) für Lebensmittel, hergestellt nach einem Verfahren nach einem der vorstehenden Ansprüche, wobei die Waffel eine Oberfläche (12) umfasst, **dadurch gekennzeichnet, dass** sie körniges Material (14) umfasst, das in die Struktur der Waffel integriert ist und aus der Oberfläche (12) herausragt, wobei das körnige Material aus einem oder mehreren der folgenden Produkte oder Halbfertigprodukte hergestellt wird: Getreide, Trockenfrüchte, Extrudate von halbfertigen Lebensmitteln, kandierte Früchte, getrocknetes Gemüse und Obst, Samen, Kakaobohnen usw..

7. Waffel nach Anspruch 6, wobei die Körner des körnigen Materials (14) zu einem Teil ihres Volumens in der Dicke der Waffel (10) eingeschlossen sind.

8. Waffel nach Anspruch 6 oder 7, mit einer vorgegebenen Dicke, wobei das körnige Material (14) größer ist als die Dicke.

9. Waffel nach einem der Ansprüche 6 bis 8, wobei das körnige Material (14) auf der Oberfläche gemäß einem vorgegebenen Muster angeordnet ist.

10. Waffel nach einem der Ansprüche 6 bis 9, wobei das körnige Material (14) in einem oder mehreren vorgegebenen Bereichen der Oberfläche (12) der Waffel verteilt ist.

11. Waffel nach einem der Ansprüche 6 bis 10, wobei das körnige Material (14) um mindestens 0,1 mm aus der Oberfläche herausragt.

12. Waffel nach einem der Ansprüche 6 bis 11, wobei das körnige Material keine Verformung aufgrund von Druck erfährt oder in jedem Fall nur eine begrenzte Verformung aufgrund von Druck erfährt.

## Revendications

1. Procédé de préparation d'une gaufrette (10) comportant une surface et une matière granulaire (14) intégrée dans la structure de ladite gaufrette et faisant saillie à partir de ladite surface (12), ledit procédé comportant :
- la préparation d'une pâte à gaufrette (101) ;
- l'introduction de ladite pâte dans la chambre de mise en forme d'une plaque ou d'un moule de cuisson (104) ;
- la cuisson de ladite pâte à l'intérieur de ladite chambre de mise en forme pour obtenir ladite gaufrette à la fin de l'étape de cuisson (105) ;
ledit procédé étant **caractérisé en ce qu'**il comporte :
- l'introduction (103) de ladite matière granulaire dans ladite chambre de mise en forme séparément de ladite pâte, et la mise en contact de ladite matière granulaire avec ladite pâte avant ladite étape de cuisson (105) ou au moins avant la fin de ladite étape de cuisson, de telle sorte qu'une fois ladite étape terminée, ladite matière granulaire sera intégrée dans la structure de ladite gaufrette et fera saillie à partir de ladite surface,
dans lequel ladite matière granulaire est obtenue à partir d'un ou plusieurs des produits ou produits semi-finis suivants : céréales, fruits secs, extrusions de produits alimentaires semi-finis, fruits confits, légumes et fruits secs, graines, fèves de cacao, etc.,
dans lequel ladite plaque ou ledit moule de cuisson (20) comporte une première demi-plaque ou un premier demi-moule (21) et une deuxième demi-plaque ou un deuxième demi-moule (22) qui présentent des surfaces de mise en forme (21A, 22A) respectives et sont mobiles l'un par rapport à l'autre entre un état ouvert et un état fermé dans lequel les surfaces de mise en forme (21A, 22A) respectives desdites première et deuxième demi-plaques ou desdits premier et deuxième demi-moules (21, 22) délimitent ensemble ladite chambre de mise en forme (24), ledit procédé incluant :
- dans l'état ouvert desdites demi-plaques ou desdits demi-moules (21, 22), le dépôt de la matière granulaire (14) sur ladite première ou deuxième surface de mise en forme (21A, 22A) selon un motif prédéfini, puis la distribution de la pâte à gaufrette sur ladite première ou deuxième surface de mise en forme (21A, 22A) ;
- le fait d'amener lesdites demi-plaques ou lesdits demi-moules (21, 22) dans l'état fermé et, dans cet état, la cuisson de ladite pâte à gaufrette dans ladite chambre de mise en forme (24), dans lequel dans l'état fermé desdites première et deuxième demi-plaques ou desdits premier et deuxième demi-moules (21, 22) la matière granulaire est retenue élastiquement par au moins un insert élastique (23) qui définit au moins partiellement la surface de mise en forme de ladite première ou deuxième demi-plaque ou dudit premier ou deuxième demi-moule (21, 22).

2. Procédé selon la revendication 1, dans lequel ladite matière granulaire (14) est agencée à l'intérieur de ladite chambre de mise en forme selon ledit motif prédéfini.

3. Procédé selon la revendication 1 ou la revendication 2, dans lequel la chambre de mise en forme présente une surface interne, formée sur laquelle se trouve la surface de ladite gaufrette, et dans lequel la surface interne de la chambre de mise en forme est délimitée au moins partiellement par un ou plusieurs inserts constitués d'une matière élastique pour fournir un support élastique pour la matière granulaire.

4. Procédé selon la revendication 1, dans lequel ladite matière granulaire (14) est pressée contre ledit insert élastique (23) par au moins une partie (21A' ; 22A') de la surface de mise en forme (21A ; 22A) de ladite deuxième ou première demi-plaque ou dudit deuxième ou premier demi-moule (22 ; 21) qui est opposée audit insert élastique (23) de telle sorte que ladite matière granulaire (14) pénétrera au moins partiellement dans ledit insert élastique (23).

5. Procédé selon la revendication 1, dans lequel la chambre de mise en forme présente une surface interne, formée sur laquelle se trouve la surface de ladite gaufrette, et dans lequel une ou plusieurs cavités sont prévues sur la surface interne de la chambre de mise en forme pour loger la matière granulaire dans une position au moins partiellement située sous la surface interne elle-même.

6. Gaufrette (10) pour produits alimentaires, obtenue par un procédé selon l'une quelconque des revendications précédentes, ladite gaufrette comportant une surface (12),
**caractérisée en ce qu'**elle comporte une matière granulaire (14) intégrée dans la structure de ladite gaufrette et faisant saillie à partir de ladite surface (12), dans laquelle ladite matière granulaire est obtenue à partir d'un ou plusieurs des produits ou produits semi-finis suivants : céréales, fruits secs, extrusions de produits alimentaires semi-finis, fruits confits, légumes et fruits secs, graines, fèves de cacao, etc.

7. Gaufrette selon la revendication 6, dans laquelle les granulés de ladite matière granulaire (14) sont englobés dans l'épaisseur de ladite gaufrette (10) pour une partie de leur volume.

8. Gaufrette selon la revendication 6 ou la revendication 7, ayant une épaisseur donnée et dans laquelle ladite matière granulaire (14) est d'une taille supérieure à ladite épaisseur.

9. Gaufrette selon l'une quelconque des revendications 6 à 8, dans laquelle ladite matière granulaire (14) est positionnée sur ladite surface selon un motif prédéfini.

10. Gaufrette selon l'une quelconque des revendications 6 à 9, dans laquelle ladite matière granulaire (14) est répartie dans une ou plusieurs régions prédéfinies de ladite surface (12) de ladite gaufrette.

11. Gaufrette selon l'une quelconque des revendications 6 à 10, dans laquelle ladite matière granulaire (14) fait saillie à partir de ladite surface d'au moins 0,1 mm.

12. Gaufrette selon l'une quelconque des revendications 6 à 11, dans laquelle ladite matière granulaire ne subit pas de déformation due à la pression ou, dans tous les cas, subit seulement une déformation limitée due à la pression.
